# EUROPÄISCHE PATENTSCHRIFT

(11) **EP 3 297 864 B1**
(45) Veröffentlichungstag und Bekanntmachung des Hinweises auf die Patenterteilung: **13.03.2019**
(21) Anmeldenummer: 16716624.8
(22) Anmeldetag: 18.04.2016
(51) Int. Cl.: B60K 6/48, B60K 6/547, B60K 6/365, F16H 3/66, F16H 3/44

(54) **GETRIEBE FÜR EIN KRAFTFAHRZEUG, ANTRIEBSSTRANG FÜR EIN HYBRIDFAHRZEUG, UND VERFAHREN ZUM BETRIEB EINES SOLCHEN ANTRIEBSSTRANGES**
TRANSMISSION FOR A MOTOR VEHICLE, DRIVE TRAIN FOR A HYBRID VEHICLE, AND METHOD FOR OPERATING SUCH A DRIVE TRAIN
BOÎTE DE VITESSES POUR UN VÉHICULE À MOTEUR, GROUPE MOTOPROPULSEUR POUR UN VÉHICULE HYBRIDE ET PROCÉDÉ DE FONCTIONNEMENT D'UN TEL GROUPE MOTOPROPULSEUR

(30) Priorität: 18.05.2015 DE 102015209050
(43) Veröffentlichungstag der Anmeldung: 28.03.2018
(73) Patentinhaber: ZF Friedrichshafen AG, 88046 Friedrichshafen (DE)
(72) Erfinder: BREHMER, Martin, 88069 Tettnang (DE); BECK, Stefan, 88097 Eriskirch (DE); HORN, Matthias, 88069 Tettnang (DE); KALTENBACH, Johannes, 88048 Friedrichshafen (DE); KING, Julian, 6830 Rankweil (AT); MORAW, Jens, 88045 Friedrichshafen (DE); MÜNCH, Eckehard, 32257 Bünde (DE); PAWLAKOWITSCH, Juri, 88263 Horgenzell (DE); SCHARR, Stephan, 88045 Friedrichshafen (DE); WARTH, Viktor, 88048 Friedrichshafen (DE); WECHS, Michael, 88138 Weißensberg (DE); ZIEMER, Peter, 88069 Tettnang (DE); GRIESMEIER, Uwe, 88677 Markdorf (DE); KUBERCZYK, Raffael, 88212 Ravensburg (DE)
(86) Internationale Anmeldenummer: PCT/EP2016/058513
(87) Internationale Veröffentlichungsnummer: WO 2016/184626

(56) Entgegenhaltungen:
- WO-A2-2007/076749
- US-A1- 2007 275 813
- US-A1- 2013 267 366
- US-B1- 8 617 022

## Beschreibung

Die Erfindung betrifft ein Getriebe für ein Kraftfahrzeug, einen Antriebsstrang für ein Hybridfahrzeug mit einem solchen Getriebe, sowie ein Verfahren zum Betrieb eines solchen Antriebsstranges.

Ein Getriebe bezeichnet hier insbesondere ein mehrgängiges Getriebe, bei dem eine Vielzahl von Gängen, also feste Übersetzungsverhältnisse zwischen zwei Wellen des Getriebes, durch Schaltelemente vorzugsweise automatisch schaltbar sind. Bei den Schaltelementen handelt es sich hier beispielsweise um Kupplungen oder Bremsen. Derartige Getriebe finden vor allem in Kraftfahrzeugen Anwendung, um die Drehzahl- und Drehmomentabgabecharakteristik der Antriebseinheit den Fahrwiderständen des Fahrzeugs in geeigneter Weise anzupassen.

Die noch unveröffentlichte Patentanmeldung DE 10 2014 226 699.8 der Anmelderin beschreibt ein Getriebe mit einer Eingangswelle, einer Abtriebswelle, einem als Stufenplanetenradsatz ausgebildeten ersten Planetenradsatz, dessen Planetenräder zwei unterschiedliche Wirkdurchmesser aufweisen, und einem zweiten Planetenradsatz, wobei der erste und der zweite Planetenradsatz als Minus-Radsätze ausgebildet sind. Ein erstes Sonnenrad des ersten Planetenradsatzes steht mit dem größeren Wirkdurchmesser der Planetenräder in Eingriff. Ein zweites Sonnenrad des ersten Planetenradsatzes steht mit dem kleineren Wirkdurchmesser der Planetenräder in Eingriff. Das zweite Sonnenrad des ersten Planetenradsatzes ist mit einem Sonnenrad des zweiten Planetenradsatzes ständig verbunden. Ein Steg des ersten Planetenradsatzes ist mit einem Hohlrad des zweiten Planetenradsatzes ständig verbunden. Die Eingangswelle ist über ein erstes Schaltelement mit dem Steg des zweiten Planetenradsatzes und über ein zweites Schaltelement mit dem zweiten Sonnenrad des ersten Planetenradsatzes verbindbar. Die Abtriebswelle ist an das Hohlrad des zweiten Planetenradsatzes angebunden. Dieses Getriebe weist ferner eine elektrische Maschine auf, wobei die Eingangswelle über ein drittes Schaltelement mit deren Rotor verbindbar ist. Das erste Sonnenrad des ersten Planetenradsatzes ist mit dem Rotor entweder ständig oder über ein Zusatzschaltelement schaltbar verbunden. Ein Hohlrad des ersten Planetenradsatzes ist über ein viertes Schaltelement drehfest festsetzbar.

Die Patentanmeldung US 2007/0275813 A1 beschreibt mehrere Antriebsstrang-Getriebe, welche zumindest sechs Vorwärtsgänge und einen Rückwärtsgang bereitstellen. Die Getriebe weisen drei Planetenradsätze, bis zu sieben drehmomentführende Vorrichtungen und vier Verbindungselemente auf.

Es ist Aufgabe der Erfindung, eine alternative Ausführungsform zu dem oben beschriebenen Getriebe bereitzustellen.

Die Aufgabe wird gelöst durch die Merkmale des Patentanspruchs 1. Vorteilhafte Ausgestaltungen ergeben sich aus den Unteransprüchen, der Beschreibung sowie aus den Figuren.

Das erfindungsgemäße Getriebe weist eine Antriebswelle, eine Abtriebswelle, sowie einen ersten und zweiten Planetenradsatz, eine elektrische Maschine mit einem drehbaren Rotor und einem drehfesten Stator, sowie zumindest fünf Schaltelemente auf. Die beiden Planetenradsätze sind als Minus-Radsätze ausgebildet.

Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Ein Minus-Radsatz bezeichnet einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert. Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Der erste Planetenradsatz ist als ein Stufenplanetenradsatz ausgebildet, dessen Planetenräder zwei unterschiedlich große Wirkdurchmesser aufweisen. Ein erstes Sonnenrad des ersten Planetenradsatzes steht mit dem größeren Wirkdurchmesser der Planetenräder in Eingriff. Ein zweites Sonnenrad steht mit dem kleineren Wirkdurchmesser der Planetenräder in Eingriff.

Das zweite Sonnenrad des ersten Planetenradsatzes ist mit einem Sonnenrad des zweiten Planetenradsatzes ständig verbunden. Ein Steg des ersten Planetenradsatzes ist mit einem Hohlrad des zweiten Planetenradsatzes ständig verbunden. Erster und zweiter Planetenradsatz bilden somit einen sogenannten Simpson-Radsatz. Die Abtriebswelle ist dabei ständig an das Hohlrad des zweiten Planetenradsatzes angebunden.

Die Antriebswelle ist über ein erstes der fünf Schaltelemente mit einem Steg des zweiten Planetenradsatzes, über ein zweites der fünf Schaltelemente mit dem zweiten Sonnenrad des ersten Planetenradsatzes, und über ein drittes der fünf Schaltelemente mit ersten Sonnenrad des ersten Planetenradsatzes verbindbar. Ein Hohlrad des ersten Planetenradsatzes ist über ein viertes der fünf Schaltelemente drehfest festsetzbar, indem es über das vierte Schaltelement an ein Gehäuse oder an ein anderes drehfestes Bauelement des Getriebes schaltbar angebunden ist. Das erste Sonnenrad des ersten Planetenradsatzes ist in gleicher Weise über ein fünftes der fünf Schaltelemente drehfest festsetzbar.

Der Rotor der elektrischen Maschine des Getriebes ist mit der Antriebswelle ständig verbunden. Das Getriebe weist darüber hinaus keine weitere elektrische Maschine auf, welche mit dem ersten Sonnenrad des ersten Planetenradsatzes ständig drehfest verbunden oder durch ein Schaltelement mit diesem Sonnenrad in Wirkverbindung bringbar ist. An dieser Stelle sei darauf hingewiesen, dass das Getriebe durchaus weitere elektrische Maschinen aufweisen kann, beispielsweise zum Antrieb einer Ölpumpe.

Durch die erfindungsgemäße Ordnung der Getriebeelemente wird ein Getriebe bereitgestellt, welches zumindest sechs Vorwärtsgänge zwischen der Antriebswelle und der Abtriebswelle aufweist. Durch den Aufbau als Simpson-Radsatz zeichnet sich das Getriebe zudem durch einen guten mechanischen Wirkungsgrad aus. Der einfache Aufbau ermöglicht auch eine gute Zugänglichkeit zu den fünf Schaltelementen, wodurch deren Betätigung vereinfacht wird. Das Getriebe ist zudem sowohl für eine sogenannte Front-Längs-Anordnung als auch für eine sogenannte Front-Quer-Anordnung geeignet. Bei einer Front-Längs-Anordnung sind die äußeren Schnittstellen zu Antriebswelle und Abtriebswelle koaxial und an gegenüberliegenden axialen Enden des Getriebes angeordnet. Bei einer Front-Quer-Anordnung sind die äußeren Schnittstellen zu Antriebswelle und Abtriebswelle koaxial zueinander und am selben axialen Ende des Getriebes angeordnet, wobei die Abtriebswelle über einen Stirnradsatz mit einer zur Hauptachse des Getriebes achsparallelen Welle wirkverbunden ist. Über diese achsparallele Welle kann die vom Getriebe übertragene Leistung einem Achsgetriebe zugeführt werden.

Durch selektives paarweises Schließen der fünf Schaltelemente sind wenigstens sechs Vorwärtsgänge zwischen der Antriebswelle und der Abtriebswelle vorzugsweise automatisiert schaltbar. Der erste Vorwärtsgang wird durch Schließen des vierten Schaltelements und des dritten Schaltelements gebildet. Der zweite Vorwärtsgang wird durch Schließen des vierten Schaltelements und des zweiten Schaltelements gebildet. Der dritte Vorwärtsgang wird durch Schließen des vierten Schaltelements und des ersten Schaltelements gebildet. Der vierte Vorwärtsgang wird durch Schließen des ersten Schaltelements und des dritten Schaltelements gebildet. Der fünfte Vorwärtsgang wird durch Schließen des ersten und des fünften Schaltelements gebildet. Der sechste Vorwärtsgang wird durch Schließen des zweiten und des fünften Schaltelements gebildet. Dadurch wird, bei geeigneter Wahl der Standgetriebeübersetzungen der Planetenradsätze, eine für die Anwendung im Kraftfahrzeug gut geeignete Übersetzungsreihe erzielt. Zudem weisen zwei benachbarte Vorwärtsgänge stets ein Schaltelement auf, das in beiden diesen Gängen geschlossen ist. Dies vereinfacht den Schaltvorgang und verkürzt die Schaltdauer zwischen benachbarten Vorwärtsgängen. Da im ersten bis dritten Vorwärtsgang das vierte Schaltelement geschlossen ist, kann auch eine Direktschaltung zwischen dem ersten und dritten Vorwärtsgang vorgenommen werden. Da im dritten bis fünften Vorwärtsgang das erste Schaltelement geschlossen ist, kann auch eine Direktschaltung zwischen dem dritten und dem fünften Vorwärtsgang vorgenommen werden. Das Getriebe ermöglicht damit eine besonders vorteilhafte Vielfalt an möglichen Direktschaltvorgängen, auch ohne Einlegen von Zwischengängen.

Im vierten Vorwärtsgang werden die beiden Planetenradsätze verblockt, sodass sämtliche Elemente des ersten und zweiten Planetenradsatzes mit der gleichen Drehzahl umlaufen. Dies kann durch Schließen von zwei der folgenden Schaltelemente erreicht werden: erstes Schaltelement, zweites Schaltelement, drittes Schaltelement. Dies gilt für sämtliche Ausführungsformen und Ausführungsbeispiele. Vorzugsweise ist zumindest das erste Schaltelement an der Bildung des vierten Vorwärtsganges zu beteiligen, da das erste Schaltelement auch an der Bildung des dritten und fünften Vorwärtsgangs beteiligt ist. Dies erleichtert den Schaltvorgang vom dritten in den vierten, bzw. vom vierten in den fünften Vorwärtsgang, und umgekehrt.

Vorzugsweise ist das vierte Schaltelement als formschlüssiges Schaltelement ausgebildet. Formschlüssige Schaltelemente, beispielsweise Klauen-Schaltelemente, zeichnen sich im geöffneten Zustand durch geringere Schleppverluste als kraftschlüssige Schaltelemente aus, wodurch die Reibungsverluste des Getriebes deutlich reduzierbar sind. Durch die im geöffneten Zustand geringen Schleppverluste wird der Wirkungsgrad des Getriebes weiter verbessert, besonders da das vierte Schaltelement lediglich im ersten bis dritten Vorwärtsgang geschlossen ist. Das vierte Schaltelement ist daher bei Betrieb des Getriebes in hohen Gängen, beispielsweise bei einer Autobahnfahrt, überwiegend geöffnet. Da das vierte Schaltelement lediglich im ersten bis dritten Vorwärtsgang geschlossen ist, wird das Schaltelement bei Schaltvorgängen in einen höheren Gang stets geöffnet, aber nicht geschlossen. Ein Öffnen eines Klauen-Schaltelements ist erheblich einfacher als der Schließ-Vorgang, da beim Schließen die Klauen des Klauenschaltelements erst in die dafür vorgesehen Lücken einrücken müssen, während beim Öffnen die Klauen lediglich lastfrei gestellt werden müssen. Beide Vorgänge benötigen Zeit, wobei besonders bei Schaltvorgängen von einem niedrigen Gang in einen höheren Gang die Schaltzeit aus fahrdynamischen Gründen möglichst kurz sein soll. Da das vierte Schaltelement bei Schaltvorgängen in einen höheren Gang jedoch nie geschlossen, sondern lediglich geöffnet werden muss, besteht durch die Ausbildung des vierten Schaltelements als formschlüssiges Schaltelement keine Einschränkung hinsichtlich der Schaltdauer.

Gemäß einer Ausführungsform ist der Steg des zweiten Planetenradsatzes über ein sechstes Schaltelement drehfest festsetzbar, indem der Steg über das sechste Schaltelement schaltbar an das Gehäuse oder an ein anderes drehfestes Bauelement des Getriebes angebunden ist. Dadurch ist es möglich zumindest einen mechanischen Rückwärtsgang zwischen Antriebswelle und Abtriebswelle bereitzustellen. Dies ist nicht zwingend erforderlich, da ein Rückwärtsgang auch durch Betrieb der elektrischen Maschine entgegen einer Vorzugsdrehrichtung und Einlegen eines der Vorwärtsgänge ermöglicht werden kann. Steht die elektrische Maschine allerdings nicht zur Verfügung, beispielsweise aufgrund einer Fehlfunktion oder aufgrund eines leeren Energiespeichers, so ermöglicht das sechste Schaltelement die Bereitstellung eines konventionellen, mechanischen Rückwärtsganges.

Ein erster Rückwärtsgang ergibt sich durch Schließen des sechsten Schaltelements und des dritten Schaltelements. Ergänzend oder alternativ dazu ergibt sich ein zweiter Rückwärtsgang durch Schließen des sechsten Schaltelements und des zweiten Schaltelements. Beide diese Rückwärtsgänge haben je ein geschlossenes Schaltelement mit einem der ersten und zweiten Vorwärtsgänge gemeinsam. Dies erleichtert einen Umschaltvorgang zwischen Vorwärtsgang und Rückwärtsgang.

Vorzugsweise ist das sechste Schaltelement als formschlüssiges Schaltelement ausgebildet, beispielsweise als Klauenschaltelement. Da das sechste Schaltelement lediglich in dem zumindest einen Rückwärtsgang geschlossen ist, ist das sechste Schaltelement im Betrieb des Getriebes im Kraftfahrzeug überwiegend geöffnet. Die Ausbildung als Klauenschaltelement verbessert somit den Wirkungsgrad des Getriebes.

Vorzugsweise sind das sechste Schaltelement und das vierte Schaltelement durch einen gemeinsamen Betätigungsmechanismus betätigbar. Da das sechste und das vierte Schaltelement in keinem Gang zur gleichen Zeit geschlossen sind, ist eine solche Betätigung ohne Einschränkung der Funktionalität des Getriebes möglich. In einer ersten Stellung des Betätigungsmechanismus ist das sechste Schaltelement geschlossen, und das vierte Schaltelement ist geöffnet. In einer zweiten Stellung des Betätigungsmechanismus ist das vierte Schaltelement geschlossen, und das sechste Schaltelement ist geöffnet. In einer optionalen Mittelstellung sind sowohl das vierte als auch das sechste Schaltelement geöffnet. Durch diese doppeltwirkende Aktuatorik kann die Komplexität des Getriebes weiter reduziert werden.

Gemäß einer möglichen Ausgestaltung kann das Getriebe durch gleichzeitiges Schließen des sechsten und vierten Schaltelements blockiert werden. Auf diese Weise kann eine separate Parksperre entfallen. Sind das sechste und vierte Schaltelement durch einen gemeinsamen Betätigungsmechanismus betätigt, so muss dieser Betätigungsmechanismus einen solchen Schaltzustand ermöglichen.

Gemäß einer möglichen Ausgestaltung weist der zweite Planetenradsatz ein zweites Hohlrad auf, welches mit der Abtriebswelle verbunden ist. Auch in dieser Ausgestaltung ist das "erste" Hohlrad des zweiten Planetenradsatzes an die Abtriebswelle angebunden, da das "erste" Hohlrad mit dem zweiten Hohlrad über die Planetenräder des zweiten Planetenradsatzes verbunden ist. Die Verbindung zwischen dem Steg des zweiten Planetenradsatzes und dem sechsten Schaltelement führt dabei axial zwischen den beiden Hohlrädern des zweiten Planetenradsatzes hindurch. Vorzugsweise weisen die beiden Hohlräder denselben Wirkdurchmesser auf. Somit sind die Drehzahlen der beiden Hohlräder ident, so als ob sie miteinander verbunden wären. Diese Ausgestaltung erlaubt eine koaxiale Anordnung von Antriebswelle und Abtriebswelle an gegenüberliegenden axialen Enden des Getriebes trotz eines mechanischen Rückwärtsgangs. Eine derartige Anordnung ist insbesondere bei Fahrzeugen mit einem sogenannten Front-Längs-Antriebsstrang vorteilhaft.

Vorzugsweise sind das erste und zweite Schaltelement als Lamellenkupplung ausgebildet, welche entweder radial ineinander oder axial unmittelbar nebeneinander angeordnet sind. Die radial geschachtelte Anordnung ist insbesondere bei sogenannten Front-Quer-Getrieben vorteilhaft, um die axiale Baulänge des Getriebes möglichst gering zu halten. Bei sogenannten Front-Längs-Getrieben ist hingegen ein radial kompaktes Getriebe von Vorteil. Daher ist bei solchen Getrieben die Anordnung von erstem und zweitem Schaltelement axial unmittelbar nebeneinander vorteilhaft.

Vorzugsweise weist das Getriebe eine Anschlusswelle auf, welche als Schnittstelle zu einer Verbrennungskraftmaschine ausgebildet sein kann. Die Anschlusswelle kann dabei auch einen Torsionsschwingungsdämpfer aufweisen. Die Anschlusswelle ist über eine Trennkupplung mit der Antriebswelle verbindbar. Durch Öffnen der Trennkupplung ist ein rein elektrischer Antrieb des Kraftfahrzeugs durch die elektrische Maschine des Getriebes möglich, ohne die mit der Anschlusswelle verbundene Antriebseinheit mitzuschleppen.

Vorzugsweise sind sämtliche Schaltelemente mittels eines geschlossenen Hydrauliksystems betätigbar. Das geschlossene Hydrauliksystem weist dazu einen Druckspeicher auf, der als primäre Druckversorgung dient. Unterschreit der Druck im Druckspeicher einen Grenzwert, so wird der Druck im Druckspeicher durch eine vorzugsweise elektrisch angetriebene Pumpe angehoben. Dies reduziert den Leistungsbedarf des Hydrauliksystems, und verbessert so den Wirkungsgrad des Getriebes. Alternativ dazu kann die Betätigung der Schaltelemente auch mittels eines herkömmlichen offenen Hydrauliksystems erfolgen, bei dem die Pumpe ständig Hydraulikfluid fördert. Gemäß einer weiteren Alternative kann die Betätigung der Schaltelemente auch mittels eines elektromechanischen Betätigungssystems erfolgen. Dies verbessert den Wirkungsgrad des Getriebes sowie dessen Bauaufwand.

Das Getriebe kann Bestandteil eines Antriebsstrangs eines Hybridfahrzeugs sein. Der Antriebsstrang weist neben dem Getriebe auch eine Verbrennungskraftmaschine auf, welche mit der Anschlusswelle des Getriebes verbunden ist. Die Abtriebswelle des Getriebes ist mit einem Achsgetriebe antriebsverbunden, welcher mit Rädern des Hybridfahrzeugs verbunden ist. Der Antriebsstrang ermöglicht mehrere Antriebsmodi des Hybridfahrzeugs. In einem elektrischen Fahrbetrieb wird das Hybridfahrzeug von der elektrischen Maschine des Getriebes angetrieben, wobei die Trennkupplung geöffnet ist. In einem verbrennungsmotorischen Betrieb wird das Hybridfahrzeug von der Verbrennungskraftmaschine angetrieben, wobei die Trennkupplung geschlossen ist. In einem hybridischen Betrieb wird das Hybridfahrzeug sowohl von der Verbrennungskraftmaschine als auch von der elektrischen Maschine des Getriebes angetrieben.

Im Folgenden wird ein Anfahrvorgang eines Hybridfahrzeugs im verbrennungsmotorischen oder hybridischen Betrieb mit einem solchen Antriebsstrang beschrieben. Ist das dritte Schaltelement als Lamellenkupplung ausgebildet, so dient das dritte Schaltelement vorzugsweise als Anfahrelement. Dazu ist die Trennkupplung geschlossen. Für einen Vorwärts-Anfahrvorgang ist das vierte Schaltelement geschlossen, für einen Rückwärts-Anfahrvorgang ist das sechste Schaltelement geschlossen. Das dritte Schaltelement wird in einem Schlupfbetrieb betrieben, wodurch das von der Antriebswelle an die Abtriebswelle übertragene Anfahrmoment variiert werden kann. Ist das dritte Schaltelement als Klauenkupplung ausgebildet, also als formschlüssiges Schaltelement, so ist ein solcher Schlupfbetrieb nicht möglich. Ein Anfahrvorgang findet in diesem Fall durch Einlegen eines der ersten beiden Vorwärtsgänge oder Rückwärtsgänge und Schlupfregelung der Trennkupplung statt.

Der Antriebsstrang mit dem erfindungsgemäßen Getriebe erlaubt auch ein Laden eines Energiespeichers im Fahrzeugstillstand. Dazu ist die Trennkupplung zu schließen, wobei im Getriebe kein Gang einzulegen ist. Somit kann die mit der Antriebswelle verbundene Verbrennungskraftmaschine die elektrische Maschine antreiben, welche in einem generatorischen Betriebspunkt betrieben wird und somit einen Ladestrom erzeugt, der zum Laden des Energiespeichers benutzt werden kann.

Eine ständige Verbindung wird als Verbindung zwischen zwei Elementen bezeichnet, die stets besteht. Derart ständig verbundene Elemente drehen stets mit der gleichen Abhängigkeit zwischen deren Drehzahlen. In einer ständigen Verbindung zwischen zwei Elementen kann sich kein Schaltelement befinden. Eine ständige Verbindung ist daher von einer schaltbaren Verbindung zu unterscheiden.

Ausführungsbeispiele der Erfindung sind nachfolgend anhand der beigefügten Figuren detailliert beschrieben.
- Fig. 1: zeigt schematisch ein Getriebe entsprechend eines ersten Ausführungsbeispiels der Erfindung.
- Fig. 2: zeigt ein Schaltschema des Getriebes.
- Fig. 3: zeigt eine Schnittdarstellung des Getriebes entsprechend dem ersten Ausführungsbeispiel.
- Fig. 4: zeigt schematisch ein Getriebe entsprechend eines zweiten Ausführungsbeispiels der Erfindung.
- Fig. 5: zeigt eine Schnittdarstellung des Getriebes entsprechend dem zweiten Ausführungsbeispiel.
- Fig. 6: zeigt schematisch ein Getriebe entsprechend eines dritten Ausführungsbeispiels der Erfindung.
- Fig. 7: zeigt eine Schnittdarstellung des Getriebes entsprechend dem dritten Ausführungsbeispiel.
- Fig. 8: zeigt einen Antriebsstrang eines Hybridfahrzeugs.

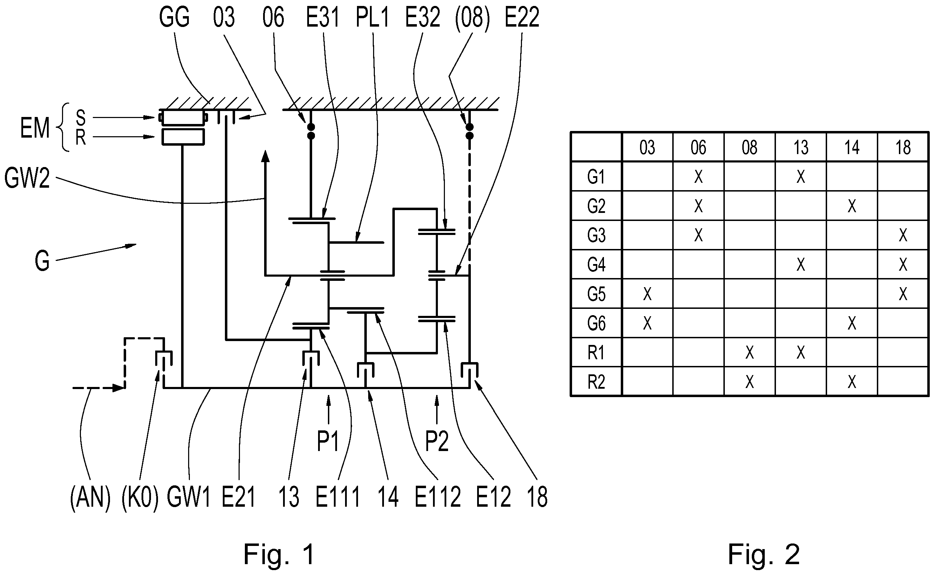

Fig. 1 zeigt schematisch ein Getriebe G entsprechend eines ersten Ausführungsbeispiels der Erfindung. Das Getriebe G weist eine Antriebswelle GW1, eine Abtriebswelle GW2, einen ersten Planetenradsatz P1 und einen zweiten Planetenradsatz P2 auf. Erster und zweiter Planetenradsatz P1, P2 sind als Minus-Radsätze ausgebildet. Der erste Planetenradsatz P1 ist als Stufenplanetenradsatz aufgebaut, dessen Planetenräder PL1 zwei unterschiedlich große Wirkdurchmesser aufweisen. Ein erstes Sonnenrad E111 des ersten Planetenradsatzes P1 steht mit dem größeren Wirkdurchmesser der Planetenräder PL1 in Eingriff. Ein zweites Sonnenrad E112 des ersten Planetenradsatzes P1 steht mit dem kleineren Wirkdurchmesser der Planetenräder PL1 in Eingriff. Das zweite Sonnenrad E112 des ersten Planetenradsatzes P1 ist mit einem Sonnenrad E12 des zweiten Planetenradsatzes P2 ständig verbunden. Ein Steg E21 des ersten Planetenradsatzes P1 ist mit einem Hohlrad E32 des zweiten Planetenradsatzes P2 ständig verbunden. Erster und zweiter Planetenradsatz P1, P2 bilden somit einen sogenannten Simpson-Radsatz aus.

Über ein erstes Schaltelement 18 ist die Antriebswelle GW1 mit dem Steg E22 des zweiten Planetenradsatzes P2 verbindbar. Über ein zweites Schaltelement 14 ist die Antriebswelle GW1 mit dem zweiten Sonnenrad E112 des ersten Planetenradsatzes P1 verbindbar. Über ein drittes Schaltelement 13 ist die Antriebswelle GW1 mit dem ersten Sonnenrad E111 des ersten Planetenradsatzes P1 verbindbar. Über ein viertes Schaltelement 06 ist ein Hohlrad E31 des ersten Planetenradsatzes P1 drehfest festsetzbar, indem es über das vierte Schaltelement 06 an ein Gehäuse GG des Getriebes G schaltbar angebunden ist. Über ein fünftes Schaltelement 03 ist erste Sonnenrad E111 des ersten Planetenradsatzes P1 in gleicher Weise drehfest festsetzbar. Über ein optional vorgesehenes sechstes Schaltelement 08 ist der Steg E22 des zweiten Planetenradsatzes P2 drehfest festsetzbar. Die Abtriebswelle GW2 ist an das Hohlrad E32 des zweiten Planetenradsatzes P2 angebunden. Das Getriebe G weist optional eine Anschlusswelle AN auf, welche über eine Trennkupplung K0 mit der Antriebswelle GW1 verbindbar ist.

Erstes, zweites, drittes und fünftes Schaltelement 18, 14, 13, 03 sind als kraftschlüssige Schaltelemente ausgebildet, beispielsweise als Lamellenkupplungen, bzw. Lamellenbremse. Das vierte und das optionale sechste Schaltelement 06, 08 sind als formschlüssige Schaltelemente ausgebildet, beispielsweise als Klauenbremsen.

Das Getriebe G umfasst ferner eine elektrische Maschine EM, welche einen drehbar gelagerten Rotor R und einen drehfest festgesetzten Stator S aufweist. Der Rotor R ist mit der Antriebswelle GW1 ständig drehfest verbunden.

Fig. 2 zeigt ein Schaltschema des Getriebes G, welches für sämtliche Ausführungsbeispiele gilt. In den Zeilen des Schaltschemas sind sechs Vorwärtsgänge G1 bis G6, sowie ein erster und zweiter Rückwärtsgang R1, R2 angegeben. In den Spalten des Schaltschemas ist durch ein X gekennzeichnet, welche Schaltelemente 18, 14, 13, 06, 03, 08 in welchem Gang, bzw. Betriebsmodus geschlossen sind.

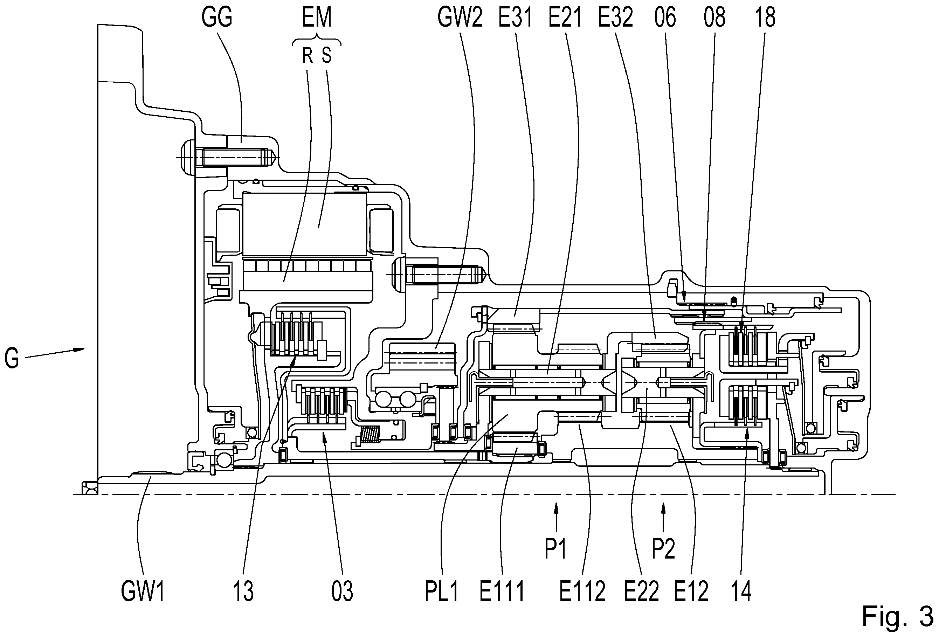

Fig. 3 zeigt eine Schnittansicht des Getriebes G entsprechend dem ersten Ausführungsbeispiel, welches als sogenanntes Front-Quer-Getriebe ausgebildet ist. Es ist nur eine Hälfte der Schnittansicht dargestellt. In Fig. 3 ist gut zu erkennen, dass das erste, zweite, dritte und fünfte Schaltelement 18, 14, 13, 03 als kraftschlüssige Schaltelemente ausgebildet sind, welche durch Federeinrichtungen im geöffneten Zustand gehalten werden, und durch Verschiebung mittels Betätigungskolben hydraulisch in den geschlossenen Zustand überführbar sind. Das zweite Schaltelement 14 ist dabei radial innerhalb des ersten Schaltelements 18 angeordnet. Das fünfte Schaltelement 03 ist radial innerhalb des dritten Schaltelements 13 angeordnet. Viertes und sechstes Schaltelement 06, 08 sind als Klauenschaltelemente ausgebildet, und sind radial außerhalb des ersten und zweiten Schaltelements 18, 14 angeordnet. Es ist nur eine einzige Schiebemuffe zur Betätigung des vierten und sechsten Schaltelements 06, 08 vorgesehen. Das Getriebe G gemäß dem ersten Ausführungsbeispiel zeichnet sich durch einen besonders kompakten Aufbau aus.

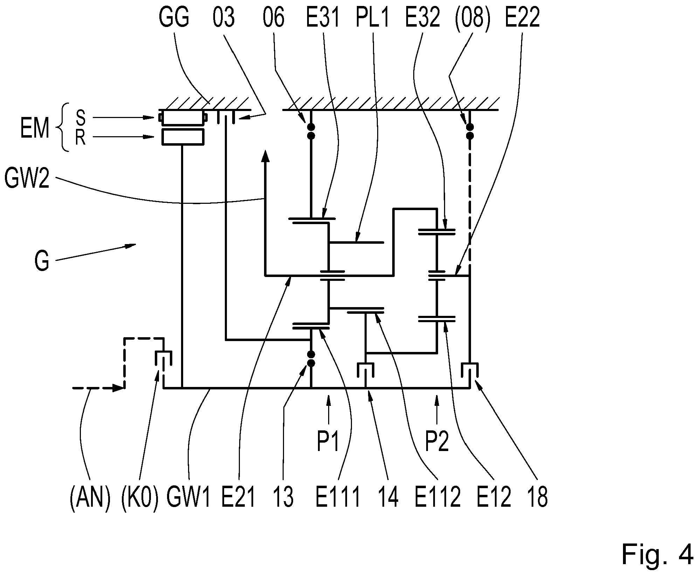

Fig. 4 zeigt schematisch ein Getriebe G entsprechend eines zweiten Ausführungsbeispiels der Erfindung. Im Unterschied zum ersten Ausführungsbeispiel ist das dritte Schaltelement 13 nun als Klauen-Schaltelement ausgebildet.

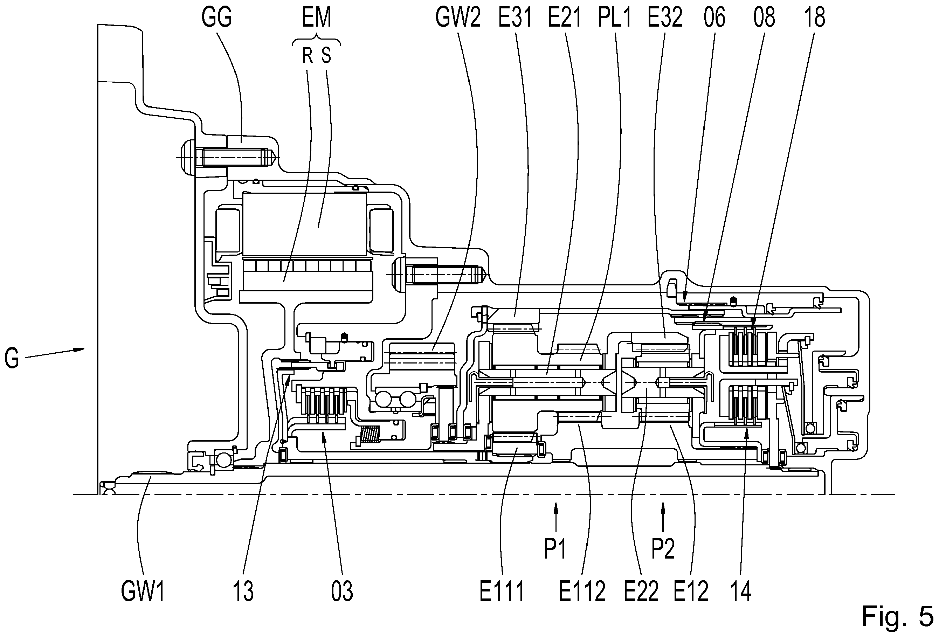

Fig. 5 zeigt eine Schnittansicht des Getriebes G entsprechend dem zweiten Ausführungsbeispiel, welches als sogenanntes Front-Quer-Getriebe ausgebildet ist. Das dritte Schaltelement 13 ist radial außerhalb des fünften Schaltelements 03 angeordnet, und weist einen separaten Betätigungskolben auf.

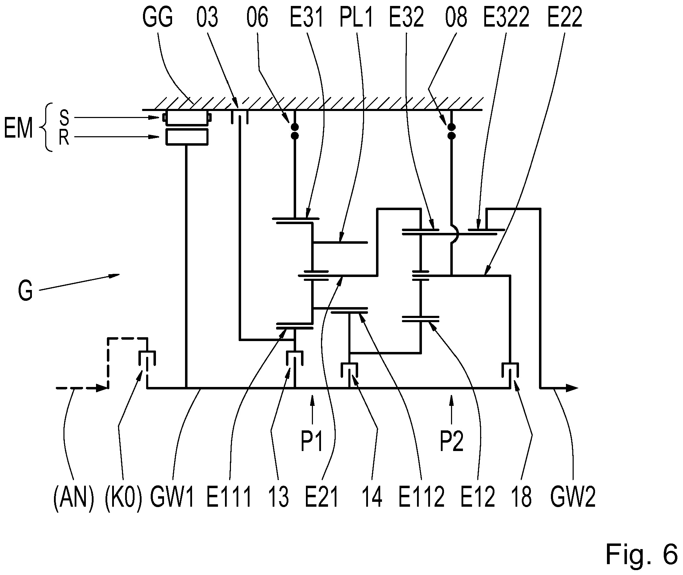

Fig. 6 zeigt schematisch ein Getriebe G entsprechend eines dritten Ausführungsbeispiels der Erfindung. Im Unterschied zu dem in Fig. 1 dargestellten ersten Ausführungsbeispiel weist das Getriebe G gemäß dem dritten Ausführungsbeispiel ein zweites Hohlrad E322 auf, welches dem zweiten Planetenradsatz P2 zugeordnet ist. Das zweite Hohlrad E322 ist unmittelbar mit der Abtriebswelle GW2 verbunden. Dadurch ist auch bei Ausbildung des Getriebes G mit sechstem Schaltelement 08 eine koaxiale Anordnung von Eingangswelle GW1 und Abtriebswelle GW2 an gegenüberliegenden axialen Enden des Getriebes G möglich. Das Hohlrad E32 des zweiten Planetenradsatzes P2 ist dabei über die Planetenräder des zweiten Planetenradsatzes P2 weiterhin an die Abtriebswelle GW2 angebunden. Die Anbindung des Stegs E22 des zweiten Planetenradsatzes P2 an das sechste Schaltelement 08 verläuft zwischen den Hohlrädern E32, E322 des zweiten Planetenradsatzes P2 hindurch.

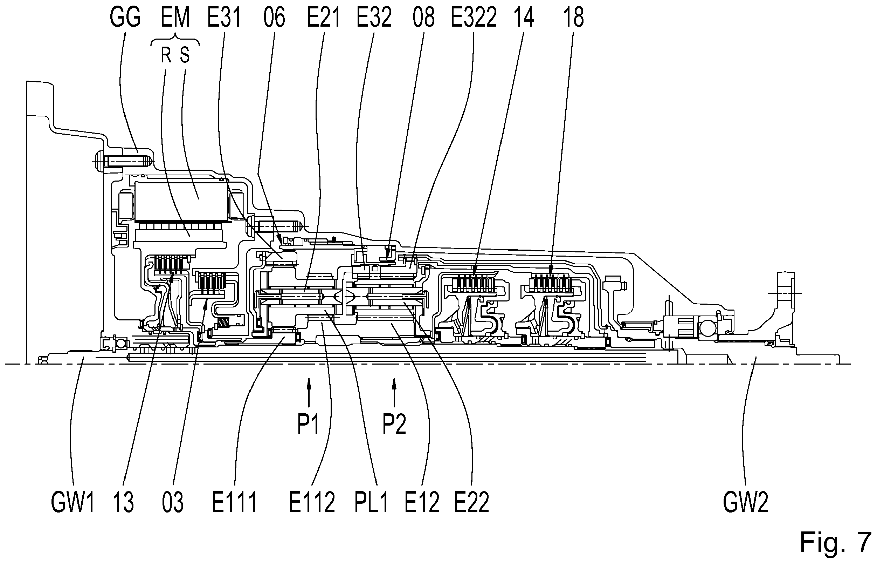

Fig. 7 zeigt eine Schnittansicht des Getriebes G entsprechend dem dritten Ausführungsbeispiel, welches als sogenanntes Front-Längs-Getriebe ausgebildet ist. Das vierte Schaltelement 06 ist radial außerhalb des ersten Planetenradsatzes P1 angeordnet. Das sechste Schaltelement 08 ist radial außerhalb des zweiten Planetenradsatzes P2 angeordnet. Es ist weiterhin nur eine einzige Schiebemuffe zur Betätigung des vierten und sechsten Schaltelements 06, 08 vorgesehen. Das erste Schaltelement 18 ist axial unmittelbar neben dem zweiten Schaltelement 14 angeordnet, und zwar zwischen dem zweiten Planetenradsatz P2 und der äußeren Schnittstelle der Abtriebswelle GW2. Drittes und fünftes Schaltelement 13, 03 sind radial innerhalb der elektrischen Maschine EM angeordnet.

Der Rotor R der elektrischen Maschine EM muss nicht drehfest mit der Antriebswelle GW1 verbunden sein. Stattdessen kann auch ein Übersetzungsgetriebe mit festem Übersetzungsverhältnis zwischen der Antriebswelle GW1 und dem Rotor R angeordnet sein, beispielsweise ein dritter Planetenradsatz oder ein Stirnradradsatz. Dies gilt für sämtliche Ausführungsformen, bzw. Ausführungsbeispiele. Vorzugsweise ist das feste Übersetzungsverhältnis zwischen Antriebswelle GW1 und Rotor R dabei so gewählt, dass der Rotor R mit einer höheren Drehzahl dreht als die Antriebswelle GW1. Dadurch kann die elektrische Maschine EM bei gleichem Soll-Moment kleiner ausgeführt werden.

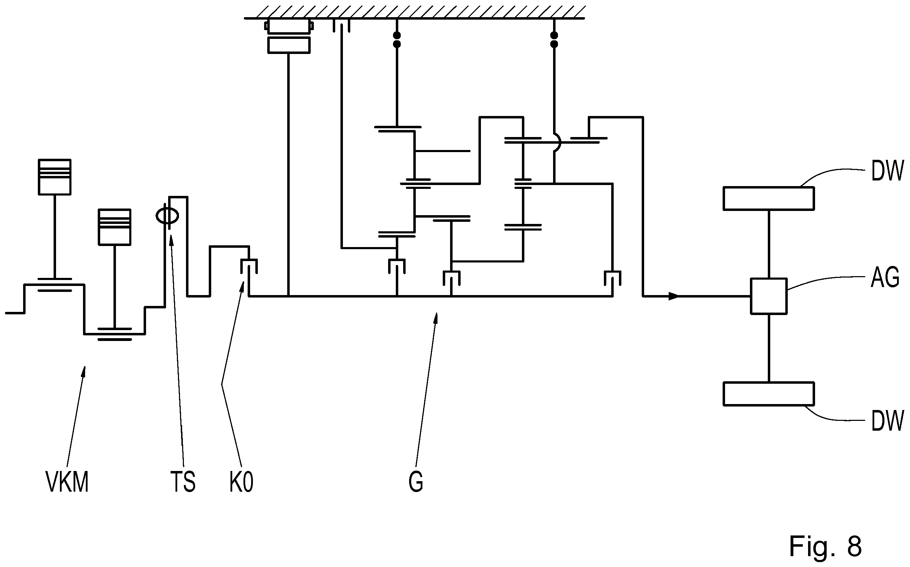

Fig. 8 zeigt einen Antriebstrang eines Hybridfahrzeugs mit einem Getriebe G gemäß dem dritten Ausführungsbeispiel. Dies ist lediglich beispielhaft anzusehen. Der Antriebsstrang könnte mit jedem der angeführten Ausführungsbeispiele des Getriebes G ausgeführt sein. Der Antriebsstrang weist eine Verbrennungskraftmaschine VKM auf, die über einen Torsionsschwingungsdämpfer TS mit der Anschlusswelle AN des Getriebes G verbunden ist. Die Anschlusswelle AN ist über die Trennkupplung K0 mit der Antriebswelle GW1 des Getriebes G verbindbar. Die Abtriebswelle GW2 ist mit einem Achsgetriebe AG antriebswirkverbunden. Vom Achsgetriebe AG ausgehend wird die Leistung, die an der Abtriebswelle GW2 anliegt, auf Räder DW des Kraftfahrzeugs verteilt. Im motorischen Betrieb der elektrischen Maschine EM wird dem Stator S über einen nicht dargestellten Wechselrichter elektrische Leistung zugeführt. Im generatorischen Betrieb der elektrischen Maschine EM führt der Stator S dem Wechselrichter elektrische Leistung zu.

### Bezugszeichen

- G: Getriebe
- GG: Gehäuse
- GW1: Antriebswelle
- GW2: Abtriebswelle
- P1: Erster Planetenradsatz
- P2: Zweiter Planetenradsatz
- E111: Erstes Sonnenrad des ersten Planetenradsatzes
- E112: Zweites Sonnenrad des ersten Planetenradsatzes
- E21: Steg des ersten Planetenradsatzes
- E31: Hohlrad des ersten Planetenradsatzes
- E312: Zweites Hohlrad des ersten Planetenradsatzes
- PL1: Planetenrad des ersten Planetenradsatzes
- E12: Sonnenrad des zweiten Planetenradsatzes
- E22: Steg des zweiten Planetenradsatzes
- E32: Hohlrad des zweiten Planetenradsatzes
- E322: Zweites Hohlrad des zweiten Planetenradsatzes
- 18: Erstes Schaltelement
- 14: Zweites Schaltelement
- 13: Drittes Schaltelement
- 06: Viertes Schaltelement
- 03: Fünftes Schaltelement
- 08: Sechstes Schaltelement
- EM: Elektrische Maschine
- R: Rotor der elektrischen Maschine
- S: Stator der elektrischen Maschine
- G1-G6: Erster bis sechster Vorwärtsgang
- R1: Rückwärtsgang
- R2: Rückwärtsgang
- VKM: Verbrennungskraftmaschine
- DW: Räder
- AG: Achsgetriebe
- TS: Torsionsschwingungsdämpfer

## Patentansprüche

1. Getriebe (G) für ein Kraftfahrzeug, mit einer Antriebswelle (GW1), einer Abtriebswelle (GW2), einem als Stufenplanetenradsatz ausgebildeten ersten Planetenradsatz (P1), dessen Planetenräder (PL1) zwei unterschiedliche Wirkdurchmesser aufweisen, und einem zweiten Planetenradsatz (P2),
- wobei der erste und der zweite Planetenradsatz (P1, P2) als Minus-Radsätze ausgebildet sind,
- wobei ein erstes Sonnenrad (E111) des ersten Planetenradsatzes (P1) dem größeren Wirkdurchmesser der Planetenräder (PL1) zugeordnet ist,
- wobei ein zweites Sonnenrad (E112) des ersten Planetenradsatzes (P1) dem kleineren Wirkdurchmesser der Planetenräder (PL1) zugeordnet ist,
- wobei das zweite Sonnenrad (E112) des ersten Planetenradsatzes (P1) mit einem Sonnenrad (E12) des zweiten Planetenradsatzes (P2) ständig verbunden ist,
- wobei ein Steg (E21) des ersten Planetenradsatzes (P1) mit einem Hohlrad (E32) des zweiten Planetenradsatzes (P2) ständig verbunden ist,
- wobei die Antriebswelle (GW1) über ein erstes Schaltelement (18) mit einem Steg (E22) des zweiten Planetenradsatzes (P2), über ein zweites Schaltelement (14) mit dem zweiten Sonnenrad (E112) des ersten Planetenradsatzes (P1), und über ein drittes Schaltelement (13) mit dem ersten Sonnenrad (E111) des ersten Planetenradsatzes (P1) verbindbar ist,
- wobei ein Hohlrad (E31) des ersten Planetenradsatzes (P1) über ein viertes Schaltelement (06) drehfest festsetzbar ist,
- wobei das erste Sonnenrad (E111) des ersten Planetenradsatzes (P1) über ein fünftes Schaltelement (03) drehfest festsetzbar ist,
- wobei die Abtriebswelle (GW2) an das Hohlrad (E32) des zweiten Planetenradsatzes (P2) angebunden ist,
- wobei das Getriebe (G) eine elektrische Maschine (EM) aufweist, deren Rotor (R) mit der Antriebswelle (GW1) ständig verbunden ist, und
- wobei das erste Sonnenrad (E111) des ersten Planetenradsatzes (P1) mit keiner weiteren elektrischen Maschine ständig drehfest verbunden oder durch ein Schaltelement in Wirkverbindung bringbar ist.

2. Getriebe (G) nach Anspruch 1, **dadurch gekennzeichnet, dass** durch selektives paarweises Schließen der fünf Schaltelemente (18, 14, 13, 06, 03) wenigstens sechs Vorwärtsgänge (G1-G6) zwischen der Antriebswelle (GW1) und der Abtriebswelle (GW2) vorzugsweise automatisiert schaltbar sind, wobei sich
- der erste Vorwärtsgang (G1) durch Schließen des vierten Schaltelements (06) und des dritten Schaltelements (13),
- der zweite Vorwärtsgang (G2) durch Schließen des vierten Schaltelements (06) und des zweiten Schaltelements (14),
- der dritte Vorwärtsgang (G3) durch Schließen des vierten Schaltelements (06) und des ersten Schaltelements (18),
- der vierte Vorwärtsgang (G4) durch Schließen des ersten Schaltelements (18) und des dritten Schaltelements (13),
- der fünfte Vorwärtsgang (G5) durch Schließen des ersten Schaltelements (18) und des fünften Schaltelements (03), und
- der sechste Vorwärtsgang (G6) sich durch Schließen des zweiten Schaltelements (14) und des fünften Schaltelements (03) ergibt.

3. Getriebe (G) nach Anspruch 1 oder Anspruch 2, **dadurch gekennzeichnet, dass** das vierte Schaltelement (06) als formschlüssiges Schaltelement, insbesondere als Klauen-Schaltelement, ausgebildet ist.

4. Getriebe (G) nach einem der vorangehenden Ansprüche, **dadurch gekennzeichnet, dass** der Steg (E22) des zweiten Planetenradsatzes (P2) über ein sechstes Schaltelement (08) drehfest festsetzbar ist.

5. Getriebe (G) nach Anspruch 4, **dadurch gekennzeichnet, dass** sich ein erster Rückwärtsgang (R1) durch Schließen des sechsten Schaltelements (08) und des dritten Schaltelements (13) und/oder ein zweiter Rückwärtsgang (R2) durch Schließen des sechsten Schaltelements (08) und des zweiten Schaltelements (14) ergibt.

6. Getriebe (G) nach Anspruch 5, **dadurch gekennzeichnet, dass** das sechste Schaltelement (08) als formschlüssiges Schaltelement, insbesondere als Klauenschaltelement ausgebildet ist.

7. Getriebe (G) nach Anspruch 6, **dadurch gekennzeichnet, dass** das vierte Schaltelement (06) und das sechste Schaltelement (08) durch einen gemeinsamen Betätigungsmechanismus betätigbar sind.

8. Getriebe (G) nach einem Ansprüche 4 bis 7, **dadurch gekennzeichnet, dass** zur Bereitstellung einer Parksperre (P) das sechste Schaltelement (08) und das vierte Schaltelement (06) blockierbar sind.

9. Getriebe (G) nach einem der Ansprüche 4 bis 8, **dadurch gekennzeichnet, dass** der zweite Planetenradsatz (P2) ein zweites Hohlrad (E322) aufweist, welches mit der Abtriebswelle (GW2) verbunden ist, wobei die Verbindung zwischen dem Steg (E22) des zweiten Planetenradsatzes (P2) und dem sechsten Schaltelement (08) zwischen den beiden Hohlrädern (E32, E322) des zweiten Planetenradsatzes (P2) hindurchführt.

10. Getriebe (G) nach einem der vorangehenden Ansprüche, **dadurch gekennzeichnet, dass** das erste und zweite Schaltelement (18, 14) als Lamellenkupplungen ausgebildet sind, welche entweder radial ineinander oder axial unmittelbar nebeneinander angeordnet sind.

11. Getriebe (G) nach einem der vorangehenden Ansprüche, **dadurch gekennzeichnet, dass** das Getriebe (G) eine Anschlusswelle (AN) aufweist, welche über eine Trennkupplung (K0) mit der Antriebswelle (GW1) verbindbar ist.

12. Antriebsstrang für ein Hybridfahrzeug, wobei der Antriebsstrang eine Verbrennungskraftmaschine (VKM), ein Getriebe (G) nach Anspruch 11 sowie ein mit Rädern (DW) des Hybridfahrzeugs verbundenes Achsgetriebe (AG) aufweist, wobei die Anschlusswelle (AN) des Getriebes (G) über einen Torsionsschwingungsdämpfer (TS) mit der Verbrennungskraftmaschine (VKM) drehelastisch verbunden ist und die Abtriebswelle (GW2) des Getriebes (G) mit dem Achsgetriebe (AG) antriebswirkverbunden ist, wobei das Hybridfahrzeug bei geöffneter Trennkupplung (K0) in einem elektrischen Fahrbetrieb von der elektrischen Maschine (EM) allein antreibbar ist, wobei das Hybridfahrzeug bei geschlossener Trennkupplung (K0) in einem verbrennungsmotorischen Betrieb von der Verbrennungskraftmaschine (VKM) allein antreibbar ist und in einem hybridischen Betrieb von der Verbrennungskraftmaschine (VKM) und von der elektrischen Maschine (EM) antreibbar ist.

13. Verfahren zum Betrieb eines Antriebsstranges nach Anspruch 12, **dadurch gekennzeichnet, dass** das dritte Schaltelement (13) als Lamellenkupplung ausgebildet ist, wobei bei einem Anfahrvorgang des Hybridfahrzeugs im verbrennungsmotorischen oder hybridischen Betrieb die Trennkupplung (K0) geschlossen ist und für Vorwärtsfahrt das vierte Schaltelement (06) und für Rückwärtsfahrt das sechste Schaltelement (08) geschlossen ist, und das dritte Schaltelement (13) in einem Schlupfbetrieb betrieben wird.

14. Verfahren zum Betrieb eines Antriebsstranges nach Anspruch 12, **dadurch gekennzeichnet, dass** das dritte Schaltelement (13) als Klauenkupplung ausgebildet ist, wobei bei einem Anfahrvorgang des Hybridfahrzeugs im verbrennungsmotorischen oder hybridischen Betrieb für Vorwärtsfahrt der erste oder zweite Vorwärtsgang (G1, G2) und für Rückwärtsfahrt der erste oder zweite Rückwärtsgang (R1, R2) eingelegt ist, und die Trennkupplung (K0) in einem Schlupfbetrieb betrieben wird.

## Claims

1. Transmission (G) for a motor vehicle, having a drive shaft (GW1), an output shaft (GW2), a first planetary gear set (P1) which is configured as a multi-step planetary gear set and the planetary gears (PL1) of which have two different active diameters, and a second planetary gear set (P2),
- the first and the second planetary gear sets (P1, P2) being configured as negative gear sets,
- a first sun gear (E111) of the first planetary gear set (P1) being assigned to the larger active diameter of the planetary gears (PL1),
- a second sun gear (E112) of the first planetary gear set (P1) being assigned to the smaller active diameter of the planetary gears (PL1),
- the second sun gear (E112) of the first planetary gear set (P1) being connected permanently to a sun gear (E12) of the second planetary gear set (P2),
- a spider (E21) of the first planetary gear set (P1) being connected permanently to an internal gear (E32) of the second planetary gear set (P2),
- it being possible for the drive shaft (GW1) to be connected to a spider (E22) of the second planetary gear set (P2) via a first shifting element (18), to be connected to the second sun gear (E112) of the first planetary gear set (P1) via a second shifting element (14), and to be connected to the first sun gear (E111) of the first planetary gear set (P1) via a third shifting element (13),
- it being possible for an internal gear (E31) of the first planetary gear set (P1) to be fixed in a torque-proof manner via a fourth shifting element (06),
- it being possible for the first sun gear (E111) of the first planetary gear set (P1) to be fixed in a torque-proof manner via a fifth shifting element (03),
- the output shaft (GW2) being attached to the internal gear (E32) of the second planetary gear set (P2),
- the transmission (G) having an electric machine (EM), the rotor (R) of which is connected permanently to the drive shaft (GW1), and
- the first sun gear (E111) of the first planetary gear set (P1) not being connected permanently in a torque-proof manner to any further electric machine, and it not being possible for the said first sun gear (E111) to be operatively connected to any further electric machine by way of a shifting element.

2. Transmission (G) according to Claim 1, **characterized in that** at least six forward gears (G1-G6) can preferably be selected in an automated manner between the drive shaft (GW1) and the output shaft (GW2) by way of selective closure in pairs of the five shifting elements (18, 14, 13, 06, 03),
- the first forward gear (G1) arising by way of closure of the fourth shifting element (06) and the third shifting element (13),
- the second forward gear (G2) arising by way of closure of the fourth shifting element (06) and the second shifting element (14),
- the third forward gear (G3) arising by way of closure of the fourth shifting element (06) and the first shifting element (18),
- the fourth forward gear (G4) arising by way of closure of the first shifting element (18) and the third shifting element (13),
- the fifth forward gear (G5) arising by way of closure of the first shifting element (18) and the fifth shifting element (03), and
- the sixth forward gear (G6) arising by way of closure of the second shifting element (14) and the fifth shifting element (03).

3. Transmission (G) according to Claim 1 or Claim 2, **characterized in that** the fourth shifting element (06) is configured as a positively locking shifting element, in particular as a dog shifting element.

4. Transmission (G) according to one of the preceding claims, **characterized in that** the spider (E22) of the second planetary gear set (P2) can be fixed in a torque-proof manner via a sixth shifting element (08).

5. Transmission (G) according to Claim 4, **characterized in that** a first reverse gear (R1) arises by way of closure of the sixth shifting element (08) and the third shifting element (13) and/or a second reverse gear (R2) arises by way of closure of the sixth shifting element (08) and the second shifting element (14).

6. Transmission (G) according to Claim 5, **characterized in that** the sixth shifting element (08) is configured as a positively locking shifting element, in particular as a dog shifting element.

7. Transmission (G) according to Claim 6, **characterized in that** the fourth shifting element (06) and the sixth shifting element (08) can be actuated by way of a common actuating mechanism.

8. Transmission (G) according to one of Claims 4 to 7, **characterized in that** the sixth shifting element (08) and the fourth shifting element (06) can be locked in order to provide a parking lock (P).

9. Transmission (G) according to one of Claims 4 to 8, **characterized in that** the second planetary gear set (P2) has a second internal gear (E322) which is connected to the output shaft (GW2), the connection between the spider (E22) of the second planetary gear set (P2) and the sixth shifting element (08) leading through between the two internal gears (E32, E322) of the second planetary gear set (P2).

10. Transmission (G) according to one of the preceding claims, **characterized in that** the first and second shifting elements (18, 14) are configured as multi-plate clutches which are arranged either radially inside one another or axially directly next to one another.

11. Transmission (G) according to one of the preceding claims, **characterized in that** the transmission (G) has a connecting shaft (AN) which can be connected to the drive shaft (GW1) via a separating clutch (K0).

12. Drive train for a hybrid vehicle, the drive train having an internal combustion engine (VKM), a transmission (G) according to Claim 11 and an axle transmission (AG) which is connected to wheels (DW) of the hybrid vehicle, the connecting shaft (AN) of the transmission (G) being connected in a torsionally flexible manner to the internal combustion engine (VKM) via a torsional vibration damper (TS), and the output shaft (GW2) of the transmission (G) being operatively connected in drive terms to the axle transmission (AG), it being possible, in the case of an open separating clutch (K0), for the hybrid vehicle to be driven solely by the electric machine (EM) in an electric driving mode, it being possible, in the case of a closed separating clutch (K0), for the hybrid vehicle to be driven solely by the internal combustion engine (VKM) in a combustion engine mode, and to be driven by the internal combustion engine (VKM) and by the electric machine (EM) in a hybrid mode.

13. Method for operating a drive train according to Claim 12, **characterized in that** the third shifting element (13) is configured as a multi-plate clutch, the separating clutch (K0) being closed in the case of a starting operation of the hybrid vehicle in the combustion engine or hybrid mode, and the fourth shifting element (06) being closed for forward driving and the sixth shifting element (08) being closed for reverse driving, and the third shifting element (13) being operated in a continuous slip mode.

14. Method for operating a drive train according to Claim 12, **characterized in that** the third shifting element (13) is configured as a dog clutch, the first or second forward gear (G1, G2) being engaged for forward driving and the first or second reverse gear (R1, R2) being engaged for reverse driving in the case of a starting operation of the hybrid vehicle in the combustion engine or hybrid mode, and the separating clutch (K0) being operated in a continuous slip mode.

## Revendications

1. Boîte de vitesses (G) pour un véhicule automobile, comprenant un arbre d'entraînement (GW1), un arbre de sortie (GW2), un premier train planétaire (P1), réalisé sous forme de train planétaire étagé, dont les satellites (PL1) présentent deux diamètres effectifs différents, et un deuxième train planétaire (P2),
- dans laquelle le premier et le deuxième train planétaire (P1, P2) sont réalisés sous forme de trains de pignons négatifs,
- dans laquelle un premier pignon planétaire (E111) du premier train planétaire (P1) est associé au plus grand diamètre effectif des satellites (PL1),
- dans laquelle un deuxième pignon planétaire (E112) du premier train planétaire (P1) est associé au plus petit diamètre effectif des satellites (PL1),
- dans laquelle le deuxième pignon planétaire (E112) du premier train planétaire (P1) est relié en permanence à un pignon planétaire (E12) du deuxième train planétaire (P2),
- dans laquelle un porte-satellites (E21) du premier train planétaire (P1) est relié en permanence à une couronne (E32) du deuxième train planétaire (P2),
- dans laquelle l'arbre d'entraînement (GW1) peut être relié, par le biais d'un premier élément de changement de vitesse (18), à un porte-satellites (E22) du deuxième train planétaire (P2), par le biais d'un deuxième élément de changement de vitesse (14), au deuxième pignon planétaire (E112) du premier train planétaire (P1) et, par le biais d'un troisième élément de changement de vitesse (13), au premier pignon planétaire (E111) du premier train planétaire (P1),
- dans laquelle une couronne (E31) du premier train planétaire (P1) peut être fixée de manière bloquée en rotation par le biais d'un quatrième élément de changement de vitesse (06),
- dans laquelle le premier pignon planétaire (E111) du premier train planétaire (P1) peut être fixé de manière bloquée en rotation par le biais d'un cinquième élément de changement de vitesse (03),
- dans laquelle l'arbre de sortie (GW2) est relié à la couronne (E32) du deuxième train planétaire (P2),
- dans laquelle la boîte de vitesses (G) comprend un moteur électrique (EM) dont le rotor (R) est relié en permanence à l'arbre d'entraînement (GW1), et
- dans laquelle le premier pignon planétaire (E111) du premier train planétaire (P1) n'est relié en permanence à aucun autre moteur électrique ou ne peut être amené en liaison fonctionnelle avec aucun autre moteur électrique au moyen d'un élément de changement de vitesse.

2. Boîte de vitesses (G) selon la revendication 1, **caractérisée en ce que**, par fermeture sélective par paires des cinq éléments de changement de vitesse (18, 14, 13, 06, 03), au moins six rapports de marche avant (G1-G6) peuvent être commutés de préférence de manière automatisée entre l'arbre d'entraînement (GW1) et l'arbre de sortie (GW2), dans laquelle
- le premier rapport de marche avant (G1) est produit par fermeture du quatrième élément de changement de vitesse (06) et du troisième élément de changement de vitesse (13),
- le deuxième rapport de marche avant (G2) est produit par fermeture du quatrième élément de changement de vitesse (06) et du deuxième élément de changement de vitesse (14),
- le troisième rapport de marche avant (G3) est produit par fermeture du quatrième élément de changement de vitesse (06) et du premier élément de changement de vitesse (18),
- le quatrième rapport de marche avant (G4) est produit par fermeture du premier élément de changement de vitesse (18) et du troisième élément de changement de vitesse (13),
- le cinquième rapport de marche avant (G5) est produit par fermeture du premier élément de changement de vitesse (18) et du cinquième élément de changement de vitesse (03), et
- le sixième rapport de marche avant (G6) est produit par fermeture du deuxième élément de changement de vitesse (14) et du cinquième élément de changement de vitesse (03).

3. Boîte de vitesses (G) selon la revendication 1 ou 2, **caractérisée en ce que** le quatrième élément de changement de vitesse (06) est réalisé sous forme d'élément de changement de vitesse à complémentarité de forme, en particulier sous forme d'élément de changement de vitesse à griffes.

4. Boîte de vitesses (G) selon l'une des revendications précédentes, **caractérisée en ce que** le porte-satellites (E22) du deuxième train planétaire (P2) peut être fixé de manière bloquée en rotation par le biais d'un sixième élément de changement de vitesse (08).

5. Boîte de vitesses (G) selon la revendication 4, **caractérisée en ce qu'**un premier rapport de marche arrière (R1) est produit par fermeture du sixième élément de changement de vitesse (08) et du troisième élément de changement de vitesse (13) et/ou un deuxième rapport de marche arrière (R2) est produit par fermeture du sixième élément de changement de vitesse (08) et du deuxième élément de changement de vitesse (14).

6. Boîte de vitesses (G) selon la revendication 5, **caractérisée en ce que** le sixième élément de changement de vitesse (08) est réalisé sous forme d'élément de changement de vitesse à complémentarité de forme, en particulier sous forme d'élément de changement de vitesse à griffes.

7. Boîte de vitesses (G) selon la revendication 6, **caractérisée en ce que** le quatrième élément de changement de vitesse (06) et le sixième élément de changement de vitesse (08) peuvent être actionnés au moyen d'un mécanisme d'actionnement commun.

8. Boîte de vitesses (G) selon l'une des revendications 4 à 7, **caractérisée en ce que**, pour produire un verrouillage de stationnement (P), le sixième élément de changement de vitesse (08) et le quatrième élément de changement de vitesse (06) peuvent être bloqués.

9. Boîte de vitesses (G) selon l'une des revendications 4 à 8, **caractérisée en ce que** le deuxième train planétaire (P2) comprend une deuxième couronne (E322), laquelle est reliée à l'arbre de sortie (GW2), la liaison entre le porte-satellites (E22) du deuxième train planétaire (P2) et le sixième élément de changement de vitesse (08) passant entre les deux couronnes (E32, E322) du deuxième train planétaire (P2).

10. Boîte de vitesses (G) selon l'une des revendications précédentes, **caractérisée en ce que** le premier et le deuxième élément de changement de vitesse (18, 14) sont réalisés sous forme d'embrayages à disques, lesquels sont disposés soit de manière emboîtée radialement l'un dans l'autre soit de manière juxtaposée directement axialement.

11. Boîte de vitesses (G) selon l'une des revendications précédentes, **caractérisée en ce que** la boîte de vitesses (G) comprend un arbre de raccordement (AN), lequel peut être relié à l'arbre d'entraînement (GW1) par le biais d'un embrayage de séparation (K0) .

12. Groupe motopropulseur pour un véhicule hybride, dans lequel le groupe motopropulseur comprend un moteur à combustion interne (VKM), une boîte de vitesses (G) selon la revendication 11 ainsi qu'une transmission d'essieu (AG) reliée à des roues (DW) du véhicule hybride, dans lequel l'arbre de raccordement (AN) de la boîte de vitesses (G) est relié de manière élastique en torsion au moteur à combustion interne (VKM) par le biais d'un amortisseur de vibrations de torsion (TS) et l'arbre de sortie (GW2) de la boîte de vitesses (G) est relié fonctionnellement par entraînement à la transmission d'essieu (AG), dans lequel le véhicule hybride peut être entraîné par le moteur électrique (EM) seul dans un mode de conduite électrique lorsque l'embrayage de séparation (K0) est ouvert, dans lequel le véhicule hybride peut être entraîné par le moteur à combustion interne (VKM) seul dans un mode de moteur à combustion interne lorsque l'embrayage de séparation (K0) est fermé et peut être entraîné par le moteur à combustion interne (VKM) et par le moteur électrique (EM) dans un mode hybride.

13. Procédé de fonctionnement d'un groupe motopropulseur selon la revendication 12, **caractérisé en ce que** le troisième élément de changement de vitesse (13) est réalisé sous forme d'embrayage à disques, dans lequel, lors d'une opération de démarrage du véhicule hybride en mode de moteur à combustion interne ou hybride, l'embrayage de séparation (K0) est fermé et, pour la marche avant, le quatrième élément de changement de vitesse (06) est fermé et, pour la marche arrière, le sixième élément de changement de vitesse (08) est fermé, et le troisième élément de changement de vitesse (13) fonctionne dans un mode de glissement.

14. Procédé de fonctionnement d'un groupe motopropulseur selon la revendication 12, **caractérisé en ce que** le troisième élément de changement de vitesse (13) est réalisé sous forme d'embrayage à griffes, dans lequel, lors d'une opération de démarrage du véhicule hybride en mode de moteur à combustion interne ou hybride, le premier ou le deuxième rapport de marche avant (G1, G2) est enclenché pour la marche avant et le premier ou le deuxième rapport de marche arrière (R1, R2) est enclenché pour la marche arrière, et l'embrayage de séparation (K0) fonctionne dans un mode de glissement.
